# EUROPÄISCHE PATENTSCHRIFT

(11) **EP 0 601 552 B1**
(45) Veröffentlichungstag und Bekanntmachung des Hinweises auf die Patenterteilung: **02.04.1997**
(21) Anmeldenummer: 93119739.6
(22) Anmeldetag: 08.12.1993
(51) Int. Cl.: A47J 31/44

(54) **Elektrische Kaffeemaschine**
Electric coffee machine
Cafetière électrique

(30) Priorität: 10.12.1992 DE 4241615
(43) Veröffentlichungstag der Anmeldung: 15.06.1994
(73) Patentinhaber: EMIDE-METALLINDUSTRIE Gebr. Streicher, D-78588 Denkingen (DE)
(72) Erfinder: Benn, Alexander, D-70435 Stuttgart (DE); Fleckenstein, Christoph, D-70435 Stuttgart (DE); Gürleyik, Melih, D-70435 Stuttgart (DE)
(74) Vertreter: KOHLER SCHMID + PARTNER

(56) Entgegenhaltungen:
- DE-A- 2 605 957
- DE-A- 3 104 542
- DE-A- 3 112 231
- DE-C- 3 938 446
- DE-U- 8 810 770
- DE-U- 9 106 584

## Beschreibung

Die Erfindung betrifft eine elektrische Kaffeemaschine mit einem in einen durch einen Wasserbehälter definierten Raum einsetzbaren Filterbecher, der eine im wesentlichen konisch nach unten zulaufende Außenkontur hat, wobei Wandabschnitte des Wasserbehälters an die Außenkontur des Filterbechers angepaßt sind.

Eine derartige Kaffeemaschine ist beispielsweise durch die DE-A-31 04 542 bekanntgeworden.

Bei modernen Kaffeemaschinen ist man bestrebt, die Forderungen nach ästhetisch gefälligem Aussehen, kompakter Bauweise und kostengünstiger Herstellung in effektiver Weise miteinander zu kombinieren. Dabei hat es sich als günstig herausgestellt, statt des früher separat auf die Karaffe aufgesetzten Filters, den Filterbecher in den durch den Wasserbehälter definierten Raum einzubeziehen. Manche Hersteller bekannter Kaffeemaschinen sind dabei den Weg gegangen, den Filterbecher in eine über die Karaffe schwenkbare, separate Aufnahme einzusetzen, wobei diese Aufnahme dann dafür sorgt, daß der Auslauf des Filterbechers über den Einlauf der Karaffe zu liegen kommt.

Die separate Filterbecheraufnahme und der dafür notwendige Schwenkmechanismus verteuern jedoch die Herstellungskosten der Kaffeemaschine.

Bei der aus der DE-A-31 04 542 bekannten elektrischen Kaffeemaschine ist in dem Wasserbehälter eine spezielle horizontale Führung für den Filterbecher vorgesehen. Der Filterbecher weist eine horizontale Stegfläche auf, über die der Filterbecher in entsprechende Nuten oder Stufen im Körper des Wasserbehälters so einschiebbar ist, daß er über der Kante hängt. Dieses Einführen des Filterbechers über die Stegfläche in die Nuten des Wasserbehälters erfordert von einem Benutzer eine gewisse Aufmerksamkeit, um die Stegfläche bezüglich den Nuten zu orientieren und einzuführen.

Weiterhin ist aus der DE-A-26 05 957 eine elektrische Kaffeemaschine mit einer formschlüssigen Verbindung des Filterbechers in dem Wasserbehälter bekannt. Der Filterbecher ist mit einem keilförmigen Haken in Aussparungen am Wasserbehälter eingehängt, wobei sich der Filterrand auf eine Filterauflage des Gehäuses stützt. Der Wasserbehälter ist über einen halbkreisförmigen Mantel an die Wandkontur des Filterbechers angepaßt.

Es ist deshalb Aufgabe der Erfindung, eine gattungsgemäße elektrische Kaffeemaschine dahingehend weiterzubilden, daß die Anordnung des Filterbechers in der Kaffeemaschine ohne große Aufmerksamkeit erfolgen kann.

Diese Aufgabe wird dadurch gelöst, daß die Außenwand des Filterbechers ausgehend von einem im wesentlichen flachen Becherboden eine ovale, insbesondere elliptische Querschnittskontur aufweist, die allmählich zu einer kreisförmigen Querschnittskontur in Richtung zum oberen Rand hin übergeht und daß der Filterbecher im Wasserbehälter bei korrekter Stellung formschlüssig sitzt, wobei erste Zentriermittel durch den Formschluß zwischen der ovalen, insbesondere ellipitischen Wandquerschnittskontur des Filterbechers und der daran angepaßten, ebenfalls ovalen, insbesondere elliptischen Wandquerschnittskontur des Wasserbehälters gebildet sind.

Der Grundgedanke der Erfindung besteht darin, Wandabschnitte des Wasserbehälters so angepaßt an die Außenkontur des Filterbechers zu gestalten, daß letzterer in dem Wasserbehälter bei korrekter Stellung formschlüssig sitzt.

Durch den Formschluß des Filterbechers im Wasserbehälter und durch die erfindungsgemäße ovale bzw. elliptische Filterbecher-Wandkontur und entsprechend daran angepaßter Wasserbehälterwand ist es auf besonders einfache Weise möglich, den Filterbecher ohne weitere Hilfsmittel wie Stegflächen oder Nuten in den durch den Wasserbehälter definierten Raum einzusetzen. Durch die besondere Querschnittskontur des Filterbechers und des Wasserbehälters ist dabei die Orientierung des Filterbechers in dem Wasserbehälter nur in zwei Einsetzpositionen möglich. Über einen Griff oder eine Eingriffsmulde am Filterbecher kann eine der beiden Einbaupositionen dann leicht favorisiert werden.

Selbstverständlich ist dabei der Kaffeeablauf des Filterbechers flüssigkeitsdicht getrennt von dem im Wasserbehälter befindlichen Wasser.

Wenn der Filterbecher zum Beispiel an einer Vorderseite einen Griff hat, so weisen gemäß einer bevorzugten Weiterbildung der Erfindung der Filterbecher im Bereich des an seinen Boden anschließenden Wandabschnitts und der daran angepaßte Wandabschnitt des Wasserbehälters jeweils zusammenwirkende Zentriermittel auf, die eine Selbstzentrierung des Filterbechers in dem vom Wasserbehälter definierten Raum bewirken, so daß insbesondere der Griff direkt nach vorne zu liegen kommt.

Für eine gute Handhabung des Filterbechers kann es wünschenswert sein, dessen Vorderseite teilweise aus einer Vorderwand des Wasserbehälters herausragen zu lassen. In diesem Fall hat die genannte Vorderwand gemäß einer bevorAusbildung einen nach oben sich öffnenden Ausschnitt mit parabelförmiger Kontur.

Durch die beschriebenen Zentriermittel ist es nun möglich, daß dieser Vorderteil des Filterbechers, d. h. dessen Außenwand formschlüssig mit dem parabelförmigen Rand des Ausschnitts in der Vorderwand des Wasserbehälters abschließt.

Weitere Zentriermittel können durch eine Rinne im Bereich der Hinterwand des Filterbechers gebildet sein, wobei diese Rinne in Richtung einer Mantellinie des Filterbechers verläuft und mit einer entsprechenden Noppe an der daran anliegenden Wand des Wasserbehälters zusammenwirkt.

Durch den beschriebenen formschlüssigen Sitz des Filterbechers in dem durch den Wasserbehälter definierten Raum wird in vorteilhafter Weiser ein kompakter Aufbau und eine kostengünstige Herstellung der elektrischen Kaffeemaschine ermöglicht.

Durch die bevorzugt vorgesehenen Zentriermittel wird vorteilhafterweise erreicht, daß in jedem Fall der Filterbecher den korrekten Sitz einnimmt.

Nachfolgend wird eine bevorzugte Ausführungsart der Erfindung anhand der Zeichnung näher beschrieben. Es zeigen:
- Fig. 1: schematisch eine Draufsicht auf eine erfindungsgemäße elektrische Kaffeemaschine ohne Karaffe und Filterbecher bei abgenommenem Deckel;
- Fig. 2: einen Schnitt durch den durch den Wasserbehälter definierten Raum längs der Schnittlinie II-II in Figur 1;
- Fig. 3: eine Draufsicht auf die bevorzugte Ausführung eines Filterbechers;
- Fig. 4: einen Schnitt durch den Filterbecher längs der Schnittlinie IV-IV in Figur 3;
- Fig. 5: einen Querschnitt durch den Bodenabschnitt des Filterbechers längs der Schnittlinie V-V in Figur 4; und
- Fig. 6: schematisch eine perspektivische Vorderansicht der erfindungsgemäßen elektrischen Kaffeemaschine.

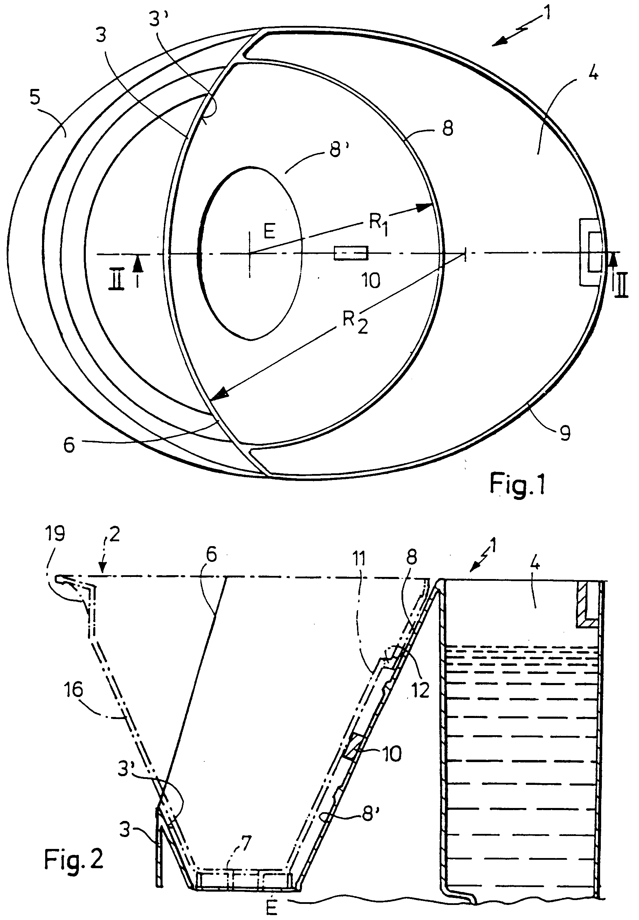

Bei der in Figur 1 in Draufsicht dargestellten elektrischen Kaffeemaschine 1 ist oberhalb eines Sockels 5 mit ovaler, insbesondere elliptischer Außenkontur ein Wasserbehälter 4 vorgesehen. Der Wasserbehälter 4 ist von einer Vorderwand 3 und einer Hinterwand 9 umschlossen. Die Vorderwand 3 und eine Zwischenwand 8 bilden eine Aufnahme bzw. einen Sitz für einen in Figur 1 nicht dargestellten Filterbecher, welcher von oben in diese Aufnahme eingestellt werden kann.

Die Vorderwand 3 befindet sich oberhalb einer in das Unterteil des Wasserbehälters ragenden Ausnehmung, in die die nicht dargestellte Karaffe teilweise einstellbar ist. Außerdem ist die Vorderwand 3 gegenüber dem vorderen Rand des Sockels 5 nach hinten versetzt.

In bevorzugter Ausführung ist der untere Abschnitt 8' der Zwischenwand 8 sowie die Kontur des inneren Teils 3 der Vorderwand 3 elliptisch ausgebildet, wohingegen die Kontur der Zwischenwand 8 in deren oberem Abschnitt kreisförmig unter einem Radius R₁ ausgebildet ist. Die Außenkontur der Vorderwand 3 hat einen größeren Krümmungsradius R₂ > R₁. Auf die beschriebene Weise hat der Filterbechersitz eine untere Öffnung E mit ovaler insbesondere elliptischer Kontur, wie Figur 1 deutlich zeigt. Der in Figur 2 dargestellte Schnitt durch den durch den Wasserbehälter 4 definierten Raum längs der Schnittlinie II-II in Figur 1 zeigt deutlich die im wesentlichen konisch nach unten zulaufende Form der des durch die Zwischenwand 8, 8' und den Innenteil 3' der Vorderwand 3 gebildeten Filterbechersitzes.

Mit gestrichelten Linien ist der Filterbecher 2 in seinem korrekten Sitz in dieser Aufnahme dargestellt.

Die Vorderwand 3 ist schräg entlang einer Schnittebene abgeschnitten, so daß der Filterbecher 2 mit dem oberen Teil seiner Vorderwand 16 aus diesem Ausschnitt 6 nach vorne herausschaut.

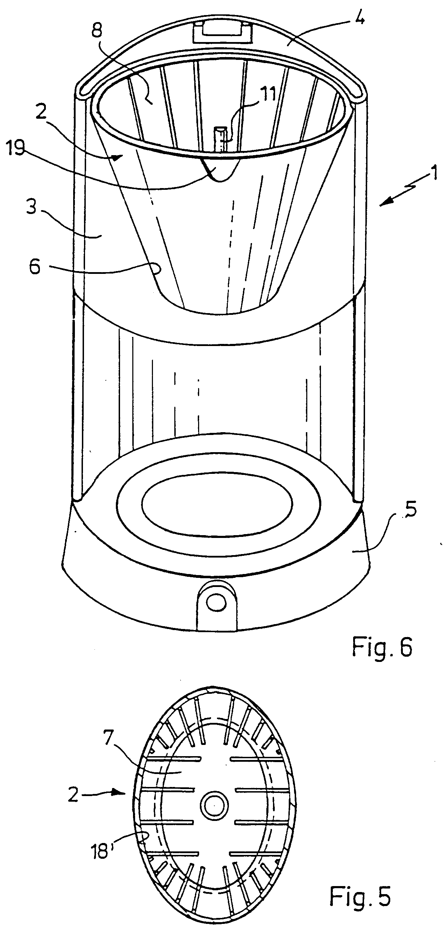

Wie weiter unten anhand der Figur 6 näher beschrieben wird, ist dieser Ausschnitt 6 entlang einer schrägen Schnittebene ausgeschnitten, so daß sich eine etwa parabelförmige Kante ergibt. (Fig. 6). Die Außenwand des Filterbechers 2 ist an den Verlauf der Innenflächen der Zwischenwand 8, 8' und der Vorderwand 3' angepaßt, sodaß der Filterbecher formschlüssig darin sitzt.

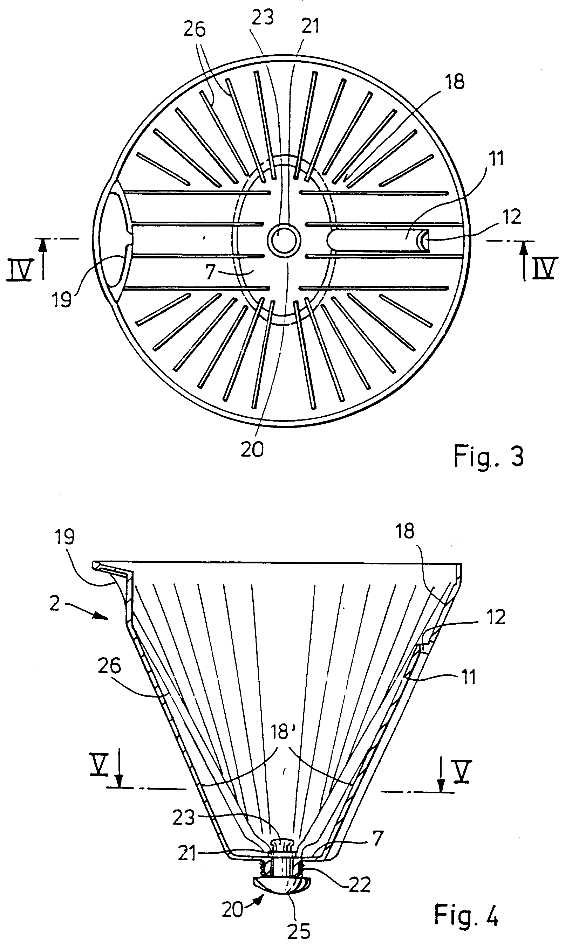

Der Filterbecher 2 wird nachstehend anhand der Figuren 3 bis 5 näher erläutert. Zunächst ist der Filterbecher 2 in Figur 3 in Draufsicht dargestellt. Ersichtlich verläuft die Kontur des oberen Abschnitts 18 der Filterbecherwand im wesentlichen kreisförmig, hat jedoch an der Vorderseite des Filterbechers eine Griffmulde 19. Der Rand buchtet sich an dieser Stelle etwas nach außen aus. An der hinteren Seite der Filterbecherwand 18 ist eine entlang einer Mantellinie verlaufende Rinne 11 vorgesehen, die von außen eingeformt ist und die eine Öffnung 12 zum Inneren des Filterbechers 2 hat. In dem an den Boden 7 des Filterbechers 2 anschließenden Bereich ist jedoch die Kontur dieses Wandabschnitts 18' oval insbesondere elliptisch, so daß die Außenabmessungen des Filterbechers 2 an die Abmessungen des durch die Zwischenwand 8, 8' und die Vorderwand 3 gebildeten Filterbechersitzes im Raum des Wasserbehälters 4 formschlüssig angepaßt ist. Der Boden 7 ist im wesentlichen flach und hat in seinem Zentrum ein auf mechanischem Druck vom Deckel der Kaffeekaraffe sich öffnendes Ventil 20, von dem ein Ventilglied 23 und ein Dichtungsring 21 zu sehen sind. Der Boden 7 ist in der Draufsicht elliptisch und ragt nicht über den Wandabschnitt 18' hinaus.

Ferner können, wie in den Figuren 3 bis 5 gezeigt, Rippen 26 an der Innenfläche der Filterbecherwand 18, 18' vorgesehen sein.

Die im wesentlichen konische Form des Filterbechers 2 ist deutlich in Figur 4 zu sehen, welche einen Schnitt längs der Schnittlinie IV-IV in Figur 3 darstellt. Das erwähnte Druckventil 20 besteht aus einem durch eine Schraubenfeder 22 vorgespannten Stößel 25, der an seinem anderen Ende, das sich innerhalb des Filterbechers befindet, ein Ventilglied 23 aufweist, welches gegenüber einem als Ventilsitz dienenden Dichtungsring 21 dichtend abschließt. Bei korrekt zentriertem Sitz des Filterbechers 2 und der darunter geschobenen Karaffe drückt deren Deckel von unten gegen den Stößel 25 des Ventils 20, woraufhin dieses öffnet. Solche Druckventile sind bei Filterbechern für Kaffeemaschinen bekannt und gehören nicht zur Erfindung.

Um die ovale und insbesondere elliptische Außenkontur des Filterbechers im unteren Abschnitt 18' der Wand 18 zu verdeutlichen, zeigt Figur 5 eine Darstellung eines Schnitts längs der Schnittlinie V-V in Fig. 4.

Figur 6 schließlich zeigt die bevorzugte Ausführung der erfindungsgemäßen Kaffeemaschine in einer perspektivischen Frontansicht, wobei die Kaffeekaraffe und der Deckel weggelassen sind. Wie bereits erwähnt, zeigt Figur 6 besonders deutlich, daß der vordere obere Teil des Filterbechers 2 nach vorne aus dem in der Vorderwand 3 gebildeten Ausschnitts 6 herausschaut, wobei die parabelförmige Kante des Ausschnitts 6 mit der Außenwand des Filterbechers 2 formschlüssig abschließt.

Bei erfindungsgemäß korrekt zentriertem Sitz des Filterbechers 2 befindet sich dessen Griffmulde 19 an der Vorderseite der Kaffeemaschine immer an derselben Stelle, so daß sich der Filter 2 praktisch ohne hinzuschauen in die Kaffeemaschine 1 einsetzen und herausnehmen läßt.

Der korrekte Sitz des Filterbechers mit nach vorne schauender Griffmulde wird durch die miteinander zusammenwirkende Rinne 11 und die Noppe 10 an der Zwischenwand 8 bewirkt.

Wesentlich ist jedenfalls, daß der Filterbecher formschlüssig in Wandabschnitten des durch den Wasserbehälter definierten Raums sitzt, wodurch sich ein kompakter Aufbau und eine preisgünstige Herstellung der Filtermaschine ergeben.

## Patentansprüche

1. Elektrische Kaffeemaschine mit einem in einen durch einen Wasserbehälter (4) definierten Raum einsetzbaren Filterbecher (2), der eine im wesentlichen konisch nach unten zulaufende Außenkontur (18, 18') hat, wobei Wandabschnitte (3, 8, 8') des Wasserbehälters (4) an die Außenkontur des Filterbechers (2) angepaßt sind, dadurch gekennzeichnet,
daß die Außenwand (18') des Filterbechers (2) ausgehend von einem im wesentlichen flachen Becherboden (7) eine ovale, insbesondere elliptische Querschnittskontur aufweist, die allmählich zu einer kreisförmigen Querschnittskontur in Richtung zum oberen Rand (18) hin übergeht und
daß der Filterbecher (2) im Wasserbehälter (4) bei korrekter Stellung formschlüssig sitzt, wobei erste Zentriermittel durch den Formschluß zwischen der ovalen, insbesondere elliptischen Wandquerschnittskontur des Filterbechers (2) und der daran angepaßten, ebenfalls ovalen, insbesondere elliptischen Wandquerschnittskontur des Wasserbehälters (4) gebildet sind.

2. Kaffeemaschine nach Anspruch 1, dadurch gekennzeichnet, daß der Filterbecher (2) im Bereich des an seinen Boden (7) anschließenden Wandabschnittes (18') und der daran anliegende Wandabschnitt (8') des Wasserbehälters (4) jeweils zusammenwirkende Zentriermittel aufweisen, die eine Selbstzentrierung und einen korrekten Sitz des Filterbechers (4) in dem vom Wasserbehälter definierten Raum bewirken.

3. Kaffeemaschine nach Anspruch 1 oder 2, dadurch gekennzeichnet, daß die Vorderwand des Wasserbehälters (4) einen nach oben sich öffnenden Ausschnitt (6) mit parabelförmiger Kontur aufweist, so daß ein nach außen ragender Abschnitt des Filterbehälters (2) mit dieser parabelförmigen Kontur formschlüssig abschließt.

4. Kaffeemaschine nach einem oder mehreren der vorangehenden Ansprüche, dadurch gekennzeichnet, daß die Außenwand des Filterbechers (2) im Bereich seines oberen Randes eine als Griffmulde dienende Einbuchtung (19) und dieser diametral gegenüberliegend eine in Richtung einer Mantellinie verlaufende Rinne (11) aufweist, und daß die am Filterbecher (2) anliegende Außenwand des Wasserbehälters (4) im Bereich dieser Rinne (11) einen noppenförmigen Vorsprung (10) aufweist, der zusammen mit der Rinne (11) zweite Zentriermittel bildet, um einen korrekt zentrierten Sitz des Filterbechers (2) so zu bewirken, daß die Griffmulde an der Vorderseite des Wasserbehälters in der Mitte des Ausschnitts (6) liegt.

5. Kaffeemaschine nach einem oder mehreren der vorhergehenden Ansprüche, dadurch gekennzeichnet, daß der Filterbecher (2) ein auf mechanischen Druck eines Karaffendeckels sich öffnendes Ablaufventil (20) im Zentrum der Bodenfläche (7) aufweist und daß die Zentriermittel den Filterbecher (2) so zentrieren, daß das Ablaufventil (20) genau in zentraler Position über dem Karaffendeckel liegt.

## Claims

1. Electrical coffee machine having a filter cup (2) which can be disposed within a region defined by a water container (4) and which has a substantially conical downwardly tapered outer contour (18, 18'), wherein wall sections (3, 8, 8') of the water container (4) are adapted to the outer contour of the filter cup (2), characterized in that
the outer wall (18') of the filter cup (2), beginning with a substantially flat cup floor (7), has an oval, in particular, an elliptical cross-sectional contour which gradually maps into a circular cross-sectional contour in the direction towards the upper edge (18) and the filter cup (2) interlockingly seats in the water container (4) when correctly positioned, wherein first centering means are formed by the interlocking fit between the oval, in particular, elliptical wall cross-sectional contour of the filter cup (2) and the likewise oval, in particular, elliptical wall cross-sectional contour of the water container (4) adapted thereto.

2. Coffee machine according to claim 1, characterized in that the filter cup (2) has mutually cooperating centering means in the vicinity of the wall section (18') adjacent to its floor (7) and of the water container (4) wall section (8') adjacent thereto which effect self-centering and proper seating of the filter cup (4) in the region defined by the water container.

3. Coffee machine according to claim 1 or 2, characterized in that the front wall of the water container (4) has a cutout (6) which is outwardly tapered in the upward direction and having parabolic contour so that an outwardly projecting section of the filter cup (2) is interlockingly contiguous with this parabolic contour.

4. Coffee machine according to one or more of the preceding claims characterized in that the outer wall of the filter cup (2) has an indentation (19) in the vicinity of its upper edge which serves as a recessed grip and a groove (11) travelling in the direction of a surface line and lying diametrically opposed thereto and the outer wall of the water container (4) adjacent to the filter cup (2) has a nub-shaped protrusion (10) in the vicinity of this groove (11) which, together with the groove (11), form two centering means to effect a properly centered seating of the filter cup (2) in such a fashion that the recessed grip seats on the front side of the water container in the middle of the cutout (6).

5. Coffee machine according to one or more of the preceding claims characterized in that the filter cup (2) has a outlet valve (20) in the center of the floor (7) which opens in response to the mechanical pressure of a carafe lid and the centering means center the filter cup (2) in such a fashion that the outlet valve (20) precisely seats centered over the carafe lid.

## Revendications

1. Cafetière électrique comportant un godet de filtre (2) susceptible d'être mis en place dans une chambre définie par un réservoir d'eau (4), lequel présente un contour extérieur (18, 18') s'étendant sensiblement coniquement vers le bas, des segments de paroi (3, 8, 8') du réservoir d'eau (4) étant adaptés au contour extérieur du godet de filtre (2), caractérisée en ce que la paroi extérieure (18') du godet de filtre (2) présente, en partant d'un fond de godet (7) sensiblement plat, un contour transversal de forme ovale, en particulier elliptique, qui se transforme progressivement en un contour transversal circulaire en direction de la bordure supérieure (18), et en ce que le godet de filtre (2) dans le réservoir d'eau (4) est logé en coopération de formes lors d'une position correcte, des premiers moyens de centrage étant formés par la coopération de formes entre le contour transversal de paroi ovale, en particulier elliptique du godet de filtre (2) et le contour transversal de paroi adapté à celui-ci et ovale, en particulier elliptique du réservoir d'eau (4).

2. Cafetière selon la revendication 1, caractérisée en ce que le godet de filtre (2), dans la région du segment de paroi (18') qui se raccorde à son fond (7), et le segment de paroi (8') du réservoir d'eau (4) qui s'y appuie présentent respectivement des moyens de centrage en coopération, qui provoquent un auto-centrage et une assise correcte du godet de filtre (2) dans la chambre définie par le réservoir d'eau.

3. Cafetière selon l'une ou l'autre des revendications 1 et 2, caractérisée en ce que la paroi avant du réservoir d'eau (4) présente une découpe (6) qui s'ouvre vers le haut et à contour parabolique, de sorte qu'un tronçon dépassant vers l'extérieur du godet de filtre (2) se termine en coopération de formes avec ce contour parabolique.

4. Cafetière selon l'une ou plusieurs des revendications précédentes, caractérisée en ce que la paroi extérieure du godet de filtre (2) présente dans la région de sa bordure supérieure, une cavité (19) servant de creux de poignée, et diamétralement en vis-à-vis de celle-ci une rainure (11) s'étendant en direction d'une ligne enveloppe, et en ce que la paroi extérieure du réservoir d'eau (4), laquelle s'appuie contre le godet de filtre (2) présente dans la région de cette rainure (11) une saillie (10) en forme de bouton qui forme conjointement avec la rainure (11) de seconds moyens de centrage pour assurer une assise correctement centrée du godet de filtre (2), de telle sorte que le creux de poignée se trouve sur la face avant du réservoir d'eau au milieu de la découpe (6).

5. Cafetière selon l'une ou plusieurs des revendications précédentes, caractérisée en ce que le godet de filtre (2) présente un clapet de sortie (20) au centre de la surface de fond (7), ledit clapet s'ouvrant sous la pression mécanique d'un couvercle de carafe, et en ce que les moyens de centrage centrent le godet de filtre (2) de telle sorte que le clapet de sortie (20) se trouve exactement dans une position centrale au-dessus du couvercle de carafe.
